Europäisches Patentamt

European Patent Office

Office européen des brevets

(19)

(11) Veröffentlichungsnummer: **0 514 731 A2**

## (12) EUROPÄISCHE PATENTANMELDUNG

(21) Anmeldenummer: **92107876.2**

(22) Anmeldetag: **11.05.92**

(51) Int. Cl.5: **G02B 6/12**

(30) Priorität: **18.05.91 DE 4116432**

(43) Veröffentlichungstag der Anmeldung:
**25.11.92 Patentblatt 92/48**

(84) Benannte Vertragsstaaten:
**DE FR GB IT SE**

(71) Anmelder: **Alcatel SEL Aktiengesellschaft**
**Lorenzstrasse 10**
**W-7000 Stuttgart 40(DE)**

(84) **DE**

(71) Anmelder: **ALCATEL N.V.**
**Strawinskylaan 341 (World Trade Center)**
**NL-1077 XX Amsterdam(NL)**

(84) **FR GB IT SE**

(72) Erfinder: **Springer, Johann, Dr.**
**Lindenstrasse 47**
**W-7307 Aichwald(DE)**
Erfinder: **Matthies, Klaus-Dieter**
**Panoramaweg 19**
**W-7141 Möglingen(DE)**

(74) Vertreter: **Hösch, Günther, Dipl.-Ing. et al**
**Alcatel SEL AG Patent- und Lizenzwesen**
**Postfach 30 09 29**
**W-7000 Stuttgart 30(DE)**

(54) **Verfahren zur Herstellung von Lichtwellenleitern auf einem Substrat.**

(57) Bei einem Verfahren zur Herstellung von Lichtwellenleitern (8) in Form von Streifenleitern auf einem Substrat (1) werden auf das Substrat (1) zwei transparente Schichten (3 und 6) übereinander aufgebracht und in Form der Lichtwellenleiter (8) strukturiert. Das Material der beiden Schichten (3 und 6) wird so gewählt, daß der Schmelzpunkt des Materials der zweiten Schicht (6) niedriger ist als derjenige des Materials der ersten Schicht (3), jedoch einen höheren Brechungsindex aufweist als die erste Schicht (3). Nach der Strukturierung wird ein Erhitzungsprozeß durchgeführt, bei dem das Material der zweiten Schicht (6) schmilzt und seine Oberfläche infolge der Oberflächenspannung im Querschnitt gesehen die Form eines Kreisbogens annimmt. Durch diese Querschnittsform ist nach dem Abschleifen oder Polieren der Stirnfläche (10) des Lichtwellenleiters (8) an einer Substratkante (11) eine gute Ein- bzw. Auskopplung von Lichtwellen in bzw. aus einer Lichtleitfaser möglich.

FIG.8

Die vorliegende Erfindung bezieht sich auf ein Verfahren zur Herstellung von Lichtwellenleitern auf einem Substrat gemäß dem Oberbegriff des Anspruchs 1.

Derartige Verfahren sind aus dem Aufsatz "Bauelemente der integrierten Optik: eine Einführung" in der Zeitschrift "Laser und Optoelektronik" Nr. 4/1986, Seiten 323 bis 326 bekannt. Bei den Epitaxieverfahren erhält man auf der Substratoberfläche erhaben verlaufende Lichtwellenleiter-Strukturen, indem auf einem einkristallinen Substrat zunächst eine Schicht aufgebracht und fotolithographisch in Form der gewünschten Lichtwellenleiter strukturiert wird, d.h., daß an den Stellen, an denen ein Lichtwellenleiter entstehen soll, die Schicht entfernt wird. Anschließend wird der Wellenleiter in Form der Struktur als einkristalline Schicht durch ein Epitaxieverfahren erzeugt. Diese Epitaxieverfahren sind wegen der zu verwendenden Materialien für Substrat und Lichtwellen mit weitgehend übereinstimmenden Gitterkonstanten, die außerdem noch unterschiedliche Brechungsindizes aufweisen müssen, auf derzeit wenige Verbihdungen beschränkt. Die durch Epitaxie erzeugten einkristallinen Lichtwellenleiter besitzen in der Regel einen der Kreis- oder Halbkreisform wenigstens annähernd angepaßten Querschnitt, so daß die Ein- oder Auskopplung von Lichtwellen an den anpolierten Stirnflächen relativ unproblematisch ist.

Bei den Diffusionsverfahren erhält man beim Eindiffundieren der Dotierungen im Substrat, also unterhalb der Substratoberfläche, einen der Kreisform ebenfalls gut angenäherten Querschnitt der Lichtwellenleiter. Die Ein- und Auskopplung von Lichtwellen an anpolierten Stirnflächen bereiten daher auch hier in der Regel keine besonderen Probleme.

Wird hingegen lediglich ein Beschichtungsverfahren, wie z.B. Aufdampfen einer transparenten Schicht und Strukturierung derselben durch einen Ätzsprozeß oder z.B. Aufdampfen einer Schicht über eine strukturierte Maske angewendet, dann erhält man Lichtwellenleiter mit einem im wesentlichen rechteckigen Querschnitt, der zur Ein- und Auskopplung von Lichtwellen z.B. aus bzw. in eine Lichtleitfaser nicht gut geeignet ist.

Mit der vorliegenden Erfindung soll daher die Aufgabe gelöst werden, durch Aufbringen einer transparenten Schicht hergestellte Lichtwellenleiter so zu gestalten, daß an angeschliffenen oder anpolierten Stirnflächen derselben eine gute Ankopplung von Lichtleitfasern möglich ist.

Gelöst wird diese Aufgabe durch die im Kennzeichen des Anspruchs 1 angegebenen Verfahrensschritte. Durch diese Maßnahmen erhalten die Lichtwellenleiter einen Querschnitt, der zum Ankoppeln von Lichtleitfasern wesentlich besser geeignet ist. Außerdem gibt es für diese Art der Herstellung von Lichtwellenleitern eine Vielzahl sowohl organischer als auch anorganischer Verbindungen. Auch als Substrat muß kein einkristallines Material verwendet werden. Vielmehr kann das Substrat aus beliebigem Material bestehen. Es sollte aber so ausgewählt werden, daß sein Temperaturausdehnungskoeffizient demjenigen des Materials, aus dem der Lichtwellenleiter gebildet ist, wenigstens annähernd entspricht.

Weitere vorteilhafte Einzelheiten der Erfindung sind in den Unteransprüchen angegeben und nachfolgend anhand der in der Zeichnung veranschaulichten Ausführungsbeispiele beschrieben. Es zeigen:

Fig 1 bis 9     die einzelnen Verfahrensschritte bei Anwendung eines zweimaligen Beschichtungs- und Abtragungsprozesses,

Fig 10 bis 14     die einzelnen Verfahrensschritte unter Anwendung eines einzigen Abtragungsprozesses und

Fig. 15     eine Ansicht einer Stirnkante im Schnitt.

Mit 1 ist ein Substrat bezeichnet, das als Träger für Lichtwellenleiter oder optische integrierte Schaltungen dient. Es besteht vorzugsweise aus Glas oder Quarz, jedoch sind auch andere organische oder anorganische Materialien und sogar Metall verwendbar.

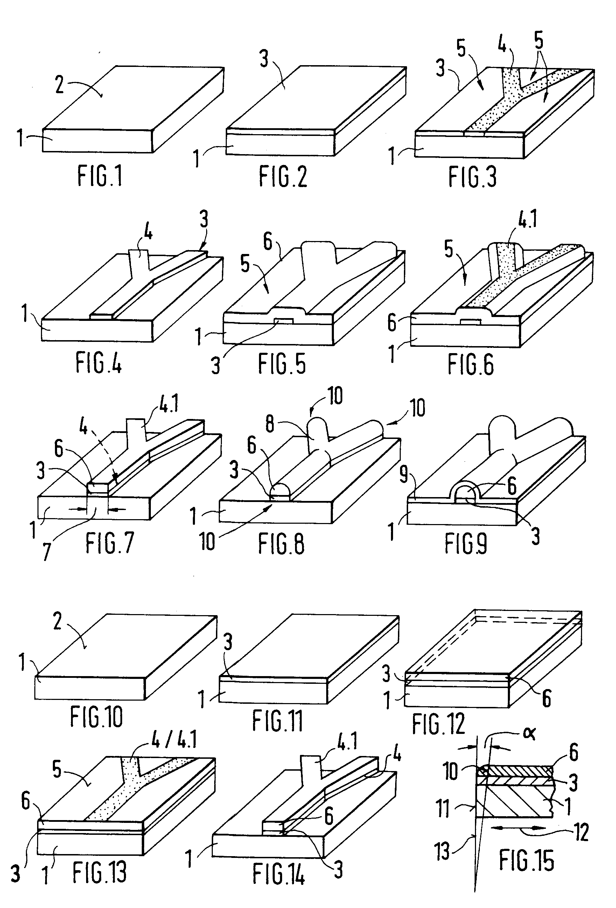

Auf das Substrat 1 wird eine die Oberfläche 2 desselben zum Teil oder ganz bedeckende erste Schicht 3 aus transparentem Material aufgebracht (Fig. 2). Außerdem wird gemäß Fig. 3 durch Abdecken einer Struktur 4 in Form des gewünschten Lichtwellenleiters, beim Ausführungsbeispiel in Form einer Y-Verzweigung, und anschließendes Abtragen der nicht abgedeckten Restschicht 5 eine erhaben auf der Oberfläche 2 des Substrats 1 vorhandene Struktur 4 erzeugt (Fig. 4). Bei Verwendung eines Polymers für die Schicht 3 erfolgt das Abtragen der Restschicht 5 bevorzugt durch Plasmaätzen. Es sind aber auch andere Ätzverfahren oder das Abtragen durch geeignete Lösungsmittel denkbar.

Die Schicht 2 kann beispielsweise aus photopolymerisierbarem Material bestehen und die Struktur 4 nach bei der Herstellung von gedruckten Schaltungen bekannten photolithographischen Verfahren erzeugt werden.

Bei Verwendung von Glas für die Schicht 3 kann die Restschicht durch Abätzen mittels Flußsäure entfernt werden.

Grundsätzlich kann auch die Restschicht 5 oder ein Grenzstreifen entlang der Struktur 4 durch Laserstrahlbehandlung oder durch andere geeignete Verfahren abgetragen werden.

In einem weiteren Verfahrensschritt wird die Struktur 4 und zumindest ein umgebender Bereich der Substratoberfläche 2 mit einer zweiten transparenten Schicht 6 beschichtet. Das Material für diese Schicht 6 wird so gewählt, daß es einen niedrigeren Schmelzpunkt besitzt als das Material der ersten Schicht 3 und daß weiterhin sein Brechungsindex größer ist als das der ersten Schicht 3. Die zweite Schicht 6 wird zweckmäßig in größerer Dikke aufgebracht als die Schicht 3. Beispielsweise beträgt die Schichtdicke der ersten Schicht 3 etwa 0,5 bis 5 $\mu$m.

Aus der zweiten Schicht 6 wird dann gemäß den Figuren 6 und 7 eine Struktur 4.1 nach dem gleichen oder einem anderen Verfahren wie zur Erzeugung der Struktur 4 erzeugt, die, ggf. mit Ausnahme der Breite 7, mit der Struktur 4 identisch ist. Die Breite 7 der Struktur 4.1 kann etwa 70 bis 100% der Breite der Struktur 4 betragen.

In einem anschließenden Erhitzungsprozeß wird die Struktur 4.1 aus der zweiten Schicht 6 so hoch und so lange erhitzt, bis sie zu schmelzen beginnt und sich ihre Oberfläche infolge der Oberflächenspannung des Materials in Form eines Kreisbogens wölbt. Dadurch nähert sich der Querschnitt derselben etwa einem Halbkreis oder einem Kreissegment. Nach dem Abkühlen bildet die Struktur 4.1 unter Beihaltung dieser Form einen für die Lichtwellenleitung gut geeigneten Lichtwellenleiter 8 in Form einer Streifenleitung, in die oder aus der Lichtwellen aufgrund des günstigen Querschnitts problemlos eingekoppelt bzw. ausgekoppelt werden können (Fig. 8).

Zur Verbesserung oder Stabilisierung der optischen Eigenschaften des Lichtwellenleiters 8 kann in einem weiteren Verfahrensschritt eine dritte transparente Schicht 9 zumindest auf den Lichtwellenleiter 8 aufgebracht werden, deren Brechungsindex kleiner ist als derjenige des Materials der zweiten Schicht 6 (Fig. 9).

Die Strukturen 4 und 4.1 aus der ersten und zweiten Schicht 3 bzw. 6 können auch in einem einzigen Prozeßschritt hergestellt werden. Dieses Verfahren wird anhand der Figuren 10 bis 14 wie folgt durchgeführt:

Zunächst wird das in Fig. 10 dargestellte Substrat 1 mit der ersten Schicht 3 versehen (Fig. 11). Auf diese wird anschließend die Schicht 6 aus bei höherer Temperatur schmelzendem Material mit größerem Brechungsindex als das Material der ersten Schicht 3 aufgebracht (Fig. 12). Hierauf werden durch geeignete Maskierung oder beispielsweise photolithographische Verfahren die Strukturen 4 und 4.1 in einem Verfahrensschritt, z.B. durch Plasmaätzen, Laserstrahlbehandlung etc., hergestellt, indem die die Strukturen umgebenden Restschichten 5 entfernt werden (Fig. 13 und 14). Anstelle der Entfernung der gesamten Restschicht kann auch ein begrenzter Bereich neben den Strukturen z.B.

in Form eines Kanals oder Streifens entfernt werden. Die weitere Behandlung erfolgt wie anhand der Figuren 8 und 9 beschrieben durch den Erhitzungs- und Abkühlprozeß.

Um eine gute Lichtwellenkopplung zu erreichen, sind die Stirnflächen 10 des Lichtwellenleiters 8 angeschliffen und anpoliert. Zweckmäßig ist die Ebene der Stirnflächen 10, wie in Fig. 15 dargestellt, an einer Substratkante 11 um einen kleinen Winkel $\alpha$ gegenüber der zur Ebene 12 des Substrats 1 senkrechten Linie 13 geneigt, um unerwünschte Reflexionen zu vermeiden.

Es ist zu erwähnen, daß Lichtwellenleiter nach diesem Verfahren auf beiden Seiten des Substrats 1 vorgesehen werden können.

Bei Verwendung eines Polymers für die erste und zweite Schicht 3 und 6 kann das Material der ersten Schicht 3 und auch einer eventuellen dritten Schicht 9 aus einem oder mehreren Polymeren auf der Basis von Polyacryl, Polyimid, hochmolekulares Polycarbonat oder Polyisocyanat und das Material der zweiten Schicht 6 kann aus wenigstens einem Polymer auf der Basis von Poylystyrol, Polyurethan, niedermolekulares Polycarbonat bestehen.

Als anorganisches Material kommen vorzugsweise Gläser auf der Basis von Siliziumdioxid zur Anwendung. Zweckmäßig ist bei Verwendung von Siliziumdioxid dessen Anteil wenigstens 30 Gew.-%, insbesondere höher als 50 Gew.-%. Die Gläser können bis zu 30 Gew.-% Blei und/oder bis zu 30 Gew.-% Zink enthalten.

Im Rahmen der Erfindung kann als erste Schicht 3 eine solche aus einem anorganischen und als zweite und ggf. dritte Schicht 6 bzw. 9 eine solche aus organischen Material verwendet werden.

Das Verhältnis Breite zu Dicke der Struktur der ersten Schicht 3 beträgt zweckmäßig etwa 1:1 bis 5:1 und dasjenige der zweiten Schicht 6 wird im Bereich von etwa 0,5:1 bis etwa 2:1 gewählt.

Die Breite der Struktur 4.1 der zweiten Schicht 6 kann vorzugsweise 0,7 bis 10 $\mu$m betragen und die Breite der Struktur 4 der ersten Schicht beträgt etwa 1 bis 10 $\mu$m. Die Schichtdicke der Struktur 4.1 der zweiten Schicht 6 beträgt im noch nicht geschmolzenen Zustand etwa 1 bis 8 $\mu$m.

Bei dem Verfahren ist darauf zu achten, daß die oberen Seitenkanten 13 der Struktur 4 der ersten Schicht 3 möglichst scharfkantig hergestellt werden, um für den Anschluß der anschmelzenden zweiten Schicht 6 definierte Ansatzstellen zu bilden.

**Patentansprüche**

1. Verfahren zur Herstellung eines oder mehrerer Lichtwellenleiter in Form einer planaren Struktur auf einem Substrat,

**gekennzeichnet durch** folgende Verfahrensschritte:

- Herstellung der Struktur (4; 4.1) aus zwei übereinander aufgebrachten Schichten (3 und 6) aus transparentem Material;
- Herstellung der zweiten Schicht (6) aus einem transparenten Material, das
  - einen größeren Brechungsindex und
  - einen niedrigeren Schmelzpunkt

aufweist als das Material der ersten Schicht (3));
- Durchführung eines Erhitzungsprozesses, dessen Temperatur und Dauer derart gewählt wird, daß
  - lediglich das Material der zweiten Schicht (6) schmilzt und
  - die Oberfläche der geschmolzenen zweiten Schicht (6) im Querschnitt gesehen in eine einem Kreisbogen zumindest angenäherte Form übergeht;
- anschließende Durchführung eines Abkühlprozesses, während dem das Material der zweiten Schicht (6) in der genannten Form erstarrt und den Lichtleiter (8) bildet.

2. Verfahren nach Anspruch 1, dadurch gekennzeichnet, daß das Substrat (1) zunächst ein- oder beidseitig mit dem Material der ersten Schicht (3) beschichtet wird und anschließend Teilbereiche (5) derselben derart entfernt werden, daß die Struktur (4) des oder der Lichtwellenleiter (8) entsteht, daß anschließend zumindest die Struktur (4) und eine angrenzende Fläche des Substrats (1) mit der zweiten Schicht (6) beschichtet wird und hierauf Teilbereiche der zweiten Schicht (6) derart entfernt werden, daß die aus der ersten Schicht (3) gebildete Struktur (4) auf 70 bis 100% ihrer Breite (7) beschichtet bleibt, und daß hierauf der Erhitzungsprozeß durchgeführt wird.

3. Verfahren nach Anspruch 1, dadurch gekennzeichnet, daß das Substrat (1) zunächst ein- oder beidseitig zumindest jeweils teilweise mit dem Material der ersten Schicht (3) und dieses anschließend mit dem Material der zweiten Schicht (6) beschichtet wird, daß anschließend Teilbereiche (5) beider Schichten (3 und 6) derart entfernt werden, daß die Strukturen (4, 4.1) für Lichtwellenleiter (8) entstehen, und daß hierauf der Erhitzungsprozeß durchgeführt wird.

4. Verfahren nach einem der Ansprüche 1 bis 3, dadurch gekennzeichnet, daß nach dem Erhitzungsprozeß oder nach dem Abkühlungsprozeß ein Beschichtungsprozeß durchgeführt wird, bei dem zumindest der entstandene Lichtwellenleiter (8) mit einem transparenten Material bedeckt wird, dessen Brechungsindex kleiner ist als derjenige des Materials der zweiten Schicht (6).

5. Verfahren nach einem der Ansprüche 1 bis 4, dadurch gekennzeichnet, daß die Struktur (4) der ersten Schicht (3) und/oder der zweiten Schicht (6) durch Abdecken der jeweiligen Strukturform mittels einer Maske und das Entfernen der Teilbereiche (5) durch einen Ätzprozeß, insbesondere einen Plasmaätzprozeß erfolgt.

6. Verfahren nach einem der Ansprüche 1 bis 4, dadurch gekennzeichnet, daß die Struktur (4 und/oder 4.1) der ersten Schicht (3) und/oder der zweiten Schicht (6) durch Verdampfen der Teilbereiche (5) mittels eines Laserstrahls gebildet wird.

7. Verfahren nach einem der Ansprüche 1 bis 6, dadurch gekennzeichnet, daß als Material für die erste und zweite Schicht (3 und 6) sowie ggf. die dritte Schicht (9) transparentes organisches Material verwendet wird.

8. Verfahren nach Anspruch 7, dadurch gekennzeichnet, daß als Material für die erste Schicht (3) und ggf. die dritte Schicht (9) wenigstens eines der Materialien Polyacryl, Polyimid, hochmolekulares Polycarbonat oder Polyisocyanat verwendet wird.

9. Verfahren nach Anspruch 7 oder 8, dadurch gekennzeichnet, daß als Material für die zweite Schicht (6) wenigstens eines der Materialien Polystyrol, Polyurethan oder niedermolekulares Polycarbonat verwendet wird.

10. Verfahren nach einem der Ansprüche 1 bis 6 oder 9, dadurch gekennzeichnet, daß als Substratmaterial und als Material für die erste Schicht (3) transparentes anorganisches Material verwendet wird.

11. Verfahren nach Anspruch 10, dadurch gekennzeichnet, daß als Material für die erste Schicht (3) und ggf. für die zweite Schicht (6) und die dritte Schicht (9) Gläser mit einem Anteil von wenigstens 30 Gew.-%, insbesondere mehr als 50 Gew.-%, Siliziumdioxid verwendet werden.

12. Verfahren nach Anspruch 11, dadurch gekennzeichnet, daß Gläser mit bis zu 30 Gew.-% Blei und/oder bis zu 30 Gew.-% Zink verwendet werden.

13. Verfahren nach einem der Ansprüche 1 bis 12, dadurch gekennzeichnet, daß als Querschnitt für die Struktur (4) der ersten Schicht (3) ein Verhältnis von Breite zu Dicke von etwa 1:1 bis 5:1 verwendet wird.

14. Verfahren nach einem der Ansprüche 1 bis 13, dadurch gekennzeichnet, daß als Querschnitt für die Struktur (4.1) der zweiten Schicht (6) im nicht geschmolzenen Zustand ein Verhältnis von Breite zu Dicke von etwa 0,5:1 bis 2:1 verwendet wird.

15. Verfahren nach einem der Ansprüche 1 bis 14, dadurch gekennzeichnet, daß die Struktur (4) aus der ersten Schicht (3) in einer Breite zwischen etwa 1 und 10 $\mu$m und in einer Dicke zwischen etwa 0,5 und 5 $\mu$m und die Struktur (4.1) aus der zweiten Schicht (6) in einer Breite zwischen etwa 0,7 und 10 $\mu$m und in einer Dicke zwischen etwa 1 und 8 $\mu$m, im Zustand vor dem Erhitzungsprozeß, hergestellt wird.

16. Verfahren nach einem der Ansprüche 1 bis 16, dadurch gekennzeichnet, daß wenigstens ein Lichtwellenleiter (8) bis an eine Substratkante (11) reicht und dort eine Fläche (10) zur Ankopplung einer Lichtleitfaser, insbesondere durch einen Schleif- oder Polierprozeß, hergestellt wird.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15